# EUROPÄISCHE PATENTSCHRIFT

(11) **EP 0 687 833 B1**
(45) Veröffentlichungstag und Bekanntmachung des Hinweises auf die Patenterteilung: **21.01.1998**
(21) Anmeldenummer: 95109429.1
(22) Anmeldetag: 19.06.1995
(51) Int. Cl.: F16H 1/00, F16H 35/06, F16H 57/02, B63H 21/30

(54) **Getriebeanlage**
Drive unit
Unité de transmission

(30) Priorität: 17.06.1994 CH 1923/94
(43) Veröffentlichungstag der Anmeldung: 20.12.1995
(73) Patentinhaber: MAAG Getriebe AG, CH-8023 Zürich (CH)
(72) Erfinder: Deeg, Thomas, CH-8472 Seuzach (CH); Hoppe, Franz, Dr., CH-8142 Uitikon (CH)
(74) Vertreter: Troesch Scheidegger Werner AG

(56) Entgegenhaltungen:
- EP-A- 0 432 461
- DE-A- 3 516 903
- DE-A- 3 819 601
- DE-A- 3 904 141
- DE-A- 3 930 514
- GB-A- 2 161 773
- GB-A- 2 244 784
- US-A- 3 428 017
- SHIP & BOAT INTERNATIONAL, Nr. 5, - Juni 1992 LONDON, Seiten 7-9, XP 000274486 VOLKER JOST 'Combined propulsion plants for high-speed yachts'

## Beschreibung

Die vorliegende Erfindung betrifft eine Anlage mit einem elastisch gelagerten Zahnradgetriebe mit mindestens einem Antriebsrad, welches Zahnradgetriebe mit seiner Abtriebswelle mit einer zu treibenden, auf einem Fundament starr gelagerten Maschine verbunden ist und mit mindestens einer Antriebsmaschine kuppelbar ist, wobei die Verbindung der Abtriebswelle mit der zu treibenden Maschine als starre Verbindung ausgebildet ist und das Getriebe am Fundament derart über mehrere voneinander getrennte elastische, auf die normalen Betriebszustände ausgelegte Lager abgestützt ist und für die vorgesehenen normalen Betriebszustände des Getriebes die Lage der Achse der Abtriebswelle im wesentlichen unveränderlich ist.

Eine derartige Getriebeanlage ist durch die DE-A-35 16 903 offenbart. Im Getriebebau werden elastische Lager zur Schwingungsisolation verwendet. In vielen Fällen sind Getriebe für Laufzustände mit variierenden Leistungen und Drehzahlen ausgelegt, so dass sich, da die elastischen Lager kraftabhängig einfedern, entsprechend das Abstützmoment zwischen dem Getriebe und dem Fundamentrahmen und damit auch die radiale Lage des Abtriebswellenflansches verändern. Damit wird aber die Ausrichtung der Abtriebswelle im Betrieb verändert, was eine unzulässige Veränderung der Lagerbelastungen zur Folge haben kann. Mit der Anlage nach DE-A-35 16 903 wird Abhilfe geschaffen, wobei allerdings äusserst komplizierte und kostspielige Mittel einzusetzen sind.

Der vorliegenden Erfindung lag die Aufgabe zugrunde, die elastische Lagerung eines Getriebes derart auszubilden, dass die Abtriebswelle ohne elastisches Zwischenglied direkt mit der Arbeitsmaschine verbunden werden kann und die Lagerstellen ausserordentlich einfach einzurichten sind.

Diese Aufgabe wird bei einer Getriebeanlage der eingangs definierten Art erfindungsgemäss durch die Merkmale gemäss kennzeichnendem Teil von Anspruch 1 gelöst.

Ein einzelner Abstützpunkt überträgt dabei jeweils eine Einzelkraft, die sich zusammensetzt aus einem Anteil aus Eigengewicht und einem Anteil aus Antriebsreaktionsmoment. Der Ansatz des Kräfte- und Momentengleichgewichtes liefert für alle Abstützpunkte Einzelkräfte und Einfederungen (wobei die Arbeitsmaschine als starrer Körper angenommen wird). Aus der Einfederung der Abstützpunkte wird die Verlagerung der Achse der Abtriebswelle berechnet.

Die Abstützpunkte sind räumlich zwischen der Fussplatte der Arbeitsmaschine und dem Boden so angeordnet, dass sich die Achse der Abtriebswelle bei verschiedenen Betriebszuständen nicht oder nur unwesentlich verlagert, d.h. dass die Achsverlagerung minimal wird. Hierzu wird die Lage der Abstützpunkte in horizontaler Richtung so lange untereinander sowie gegenüber der Arbeitsmaschine verändert und die Auswirkung auf die Lage der Abtriebsachse jeweils neu berechnet, bis die beste Anordnung gefunden ist. Neben den Lagern zur Aufnahme von senkrecht wirkenden Kräften sind auch getrennt davon Lager zur Aufnahme seitlich wirkender Kräfte vorgesehen. Eine wesentliche Vereinfachung ergibt sich daraus, dass die beiden Lagertypen jeweils unter sich baugleich ausgebildet werden können.

Besondere Ausführungsformen der Erfindung sind in den abhängigen Ansprüchen definiert.

Bei Verwendung der Anlage in einem Schiffsantrieb wird üblicherweise das Schublager für den Propeller in das Haupt-getriebe integriert.

Wenn nun das Getriebe direkt über eine Welle mit der Propellerwelle gekuppelt und starr mit dem Schiffsfundament verbunden sein muss, um gemäss heutiger Technik den Propellerschub in das Schiff einzuleiten, muss in Kauf genommen werden, dass Körperschall vom Getriebe direkt in das Schiff und das Wasser geleitet wird, was insbesondere für Anwendungen, wo niedrigste Lärmpegel gefordert werden, nach Abhilfe verlangt.

Zur Lösung des Problems wurde vorgeschlagen, entweder das Getriebe separat oder die ganze Antriebsgruppe, bestehend aus Antriebsmaschinen und Getrieben, einfach- oder doppeltelastisch auf dem Schiffsfundament zu lagern. Mit den elastischen Elementen wurden dabei im wesentlichen Kräfte in vertikaler Richtung übertragen. Querkräfte von der Grössenordnung des Propellerschubes konnten damit nicht übertragen werden. Es war deshalb bisher zwingend, das Propellerschublager bei elastischer Lagerung des Getriebes ausserhalb desselben anzuordnen.

Als Kombination mit der erfindungsgemässen Getriebeanlage wurde eine Lösung gefunden, welche die Integration eines Drucklagers, insbesondere eines Propellerdrucklagers, in das Getriebe bei gleichzeitig vollständiger elastischer Lagerung des Getriebes vorsieht. Diese besondere Ausführungsform ist in Anspruch 5 definiert.

Zurückkommend auf die Grundidee der Erfindung sei erwähnt, dass eine wirkungsvolle Dämpfung der Schallabstrahlung nach dem heutigen Stand der Technik mit doppeltelastischen Lagern möglich ist. Die Fusspunkte sind aus einzelnen Gummielementen in Verbindung mit Blöcken und Platten aus Stahl aufgebaut. Jeweils zwei oder mehr parallel angeordnete Gummielemente bilden eine horizontale elastische Schicht, von denen zwei über einen Stahlblock vertikal miteinander verbunden sind.

Die beiden Eigenfrequenzen der doppeltelastischen Lagerung sind so zu wählen, dass in den verschiedenen Fahr- bzw. Laufzuständen keine Ueberdeckung mit Verzahnungseingriffs- oder Drehfrequenzen oder deren Harmonischen vorliegt.

Hierzu kann die Dicke und die Wirkfläche der Gummischichten verändert werden. Die Masse des dazwischenliegenden Stahlblockes wird passend festgelegt und gegebenenfalls ein Hohlraum mit Blei ausgefüllt.

Die Steifigkeit der Gummielemente wird von Eigenschaften des Gummis (Abmessungen, Shorehärte) bestimmt, wobei sie vorzugsweise so gewählt wird, dass die erste Eigenfrequenz des Systems bei 20 bis 30 Hz liegt (wegen der Notwendigkeit, die vertikalen Verlagerungen des Getriebes zu begrenzen).

Die Ausführung aller Lagerfusspunkte ist gleich. Damit wird einerseits verhindert, dass sich die einzelnen Fusspunkte in ihrem Schwingungsverhalten beeinflussen und andererseits ist lediglich eine reduzierte Ersatzteilhaltung erforderlich.

Für die Aufnahme von seitlichen Kräften werden speziell ausgebildete Lagerelemente verwendet, deren Steifigkeit, im Vergleich zu vertikalen Lagern, um eine Grössenordnung niedriger ist, um eine gegenseitige Beeinflussung auszuschliessen.

Die Uebertragung ausserordentlicher Spitzenlasten (z.B. Schockkräfte bei Marinegetrieben) erfolgt über starre Anschläge, so dass die elastische Lagerung nur auf Normalbeanspruchung ausgelegt werden muss, was die Dimensionierung der elastischen Fusspunkte erleichtert.

Die Erfindung wird nachstehend anhand von in der Zeichnung dargestellten Ausführungsbeispielen noch etwas näher erläutert. Es zeigt:
- Fig. 1: rein schematisch eine von oben gesehene Fundamentierung eines Schiffsgetriebes;
- Fig. 2: die entsprechende Ansicht von der Schiffsschraube aus gesehen;
- Fig. 3: das Lagersystem schematisch, zwecks Berechnung der Abstützpunkte;

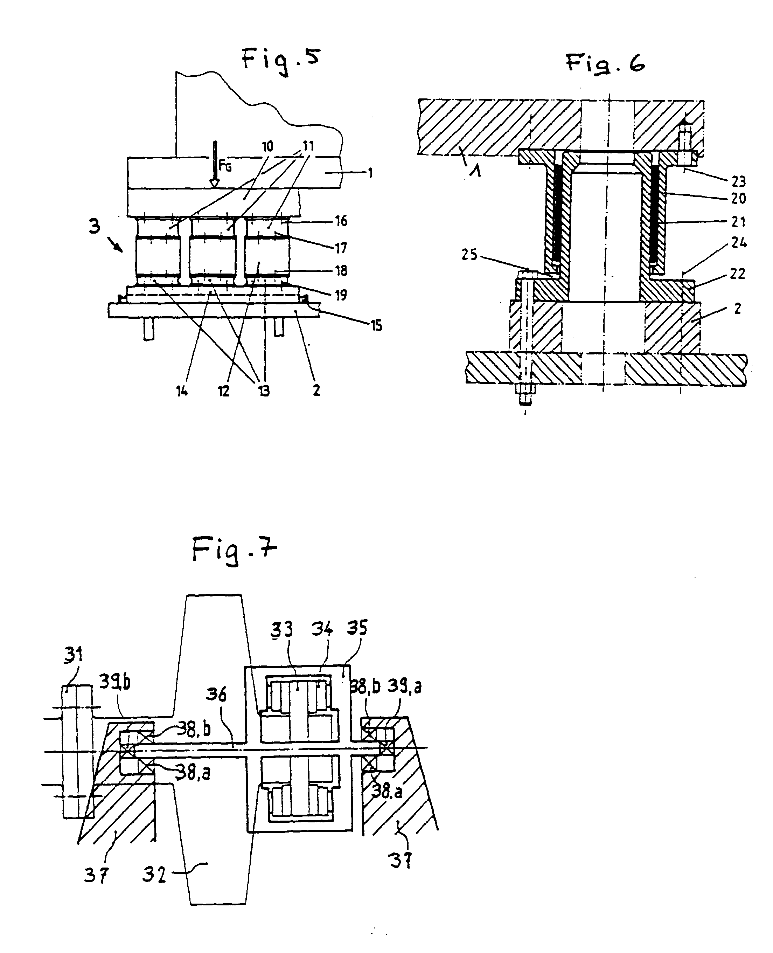

- Fig. 4: die Einfederung des Getriebes bei verschiedenen Lastzuständen;
- Fig. 5: den Aufbau eines senkrecht wirkenden Fusspunktes;
- Fig. 6: den Aufbau eines Lagerelementes für seitliche Fundamentkräfte;
- Fig. 7: die Lagerung eines Getriebes mit Schublager;
- Fig. 8 und 9: das allgemeine Prinzip der Lagerung nach Fig. 7.

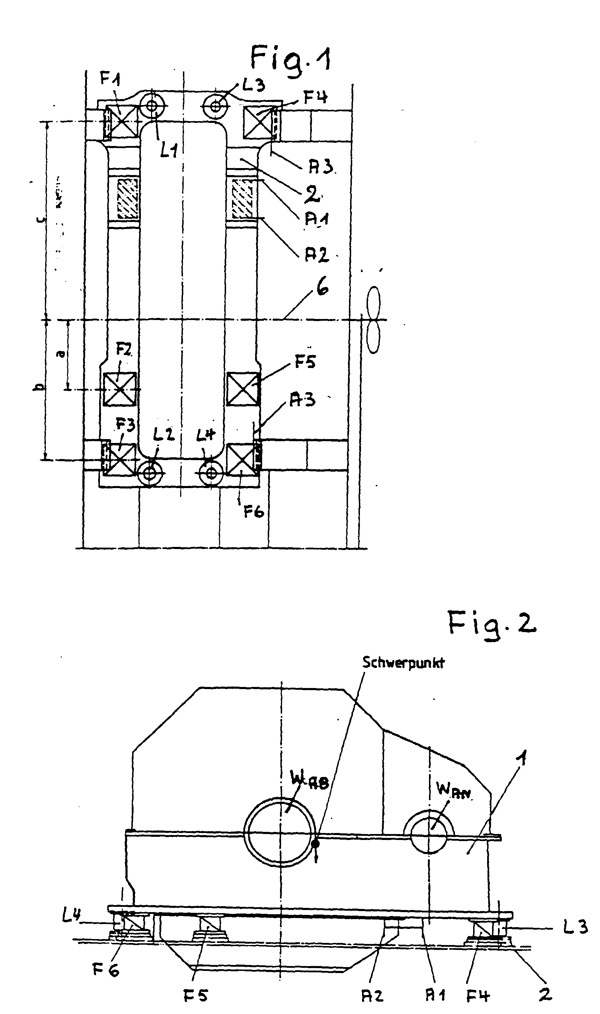

Fig. 1 und Fig. 2 zeigen die gesamte Ansicht der elastischen Lagerung einer Getriebeanlage 1 an einem Beispiel mit sechs senkrecht wirkenden Fusspunkten F1 - F6 und vier seitlich wirkenden Lagerelementen. Die Fusspunkte F übertragen nur senkrechte Kräfte, die sich aus Eigengewicht und der Ueberlagerung von Betriebs- und Arbeitskräften ergeben. Die Abstände a, b, c ergeben sich als optimales Mittel aus Einfederung unter Eigengewicht und Einfederung unter Betriebslasten bei möglichst unveränderter Lage der Achse der Abtriebswelle 6.

Die Fusspunkte F und die Lagerelemente L übertragen nur Kräfte aus normalen Betriebslasten. Starre Anschläge A1 - A3 in Abständen bis 2 mm werden wirksam, wenn unnormal hohe Kräfte, wie z.B. Massenkräfte, infolge Schockeinwirkung eingeleitet werden.

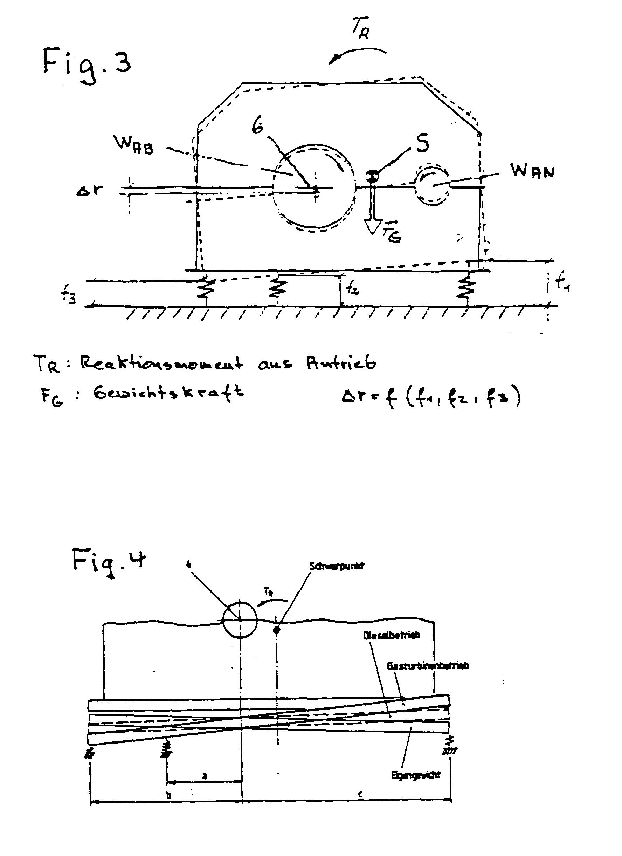

Fig. 3 zeigt schematisch die verschiedenen Lastparameter, welche auf das Getriebe wirken (Reaktionsmoment T_{R} aus Antrieb, Gewichtskraft F_{G} Einfederung f unter Last, und Achsverlagerung Δr der Abtriebswelle, wobei Δr eine Funktion der Einfederungen ist). Die Lage der Abstützpunkte wird so gewählt, dass Δr minimal wird.

Die Antriebswelle ist mit W_{AN}, die Abtriebswelle mit W_{AB} bezeichnet.

Wie Fig. 3 zeigt, ist die elastische Lagerung in einzelne, voneinander getrennte Abstützpunkte aufgeteilt. Ein einzelner Abstützpunkt überträgt jeweils eine Einzelkraft, die sich zusammensetzt aus einem Anteil aus Eigengewicht und einem Anteil aus Antriebsreaktionsmoment. Der Ansatz des Kräfte- und Momentengleichgewichtes liefert für alle Abstützpunkte Einzelkräfte und Einfederungen f1 bis f3, wobei die Arbeitsmaschine als starrer Körper angenommen wird. Aus der Einfederung der Abstützpunkte wird die Verlagerung Δr der Achse 6 der Abtriebswelle berechnet.

Die Abstützpunkte sind räumlich zwischen der Fussplatte der Arbeitsmaschine 1 und dem Boden 2 so angeordnet, dass sich die Achse 6 der Abtriebswelle bei verschiedenen Betriebszuständen nicht oder nur unwesentliche verlagert, d.h. dass die Verlagerung Δr minimal wird. Hierzu wird die Lage der Abstützpunkte in horizontaler Richtung so lange untereinander sowie gegenüber der Arbeitsmaschine verändert und die Auswirkung auf die Lage der Abtriebsachse jeweils neu berechnet, bis die beste Anordnung gefunden ist.

Wie Fig. 5 zeigt, ist ein senkrecht wirkender Fusspunkt F über eine Anschlussplatte 10 mit dem Getriebegehäusebodenflansch 1 verschraubt. Ein Federelement besteht aus dem oberen Gummielement 11, der Zwischenmasse 12 sowie dem unteren Gummielement 13, wobei alle Teile gegeneinander mit Schrauben 17, 18 verschraubt und mit Stiften gesichert sind. Mehrere Federelemente gleichen Aufbaues sind über Schraubenverbindungen 16, 19 zwischen die Anschlussplatte 10 und die Bodenplatte 14 gesetzt. Die Bodenplatte kann waagrecht geteilt sein, so dass der untere Teil über eine zur Ausrichtung notwendige Vergussmasse 15 dem Fundamentrahmen 2 fest zugeordnet ist.

Fig. 6 zeigt, dass ein seitlich wirksames Lagerelement aus dem äusseren Zylinder 20, der Gummischicht 21 sowie dem inneren Zylinder 22 besteht. Der äussere Zylinder ist über Schrauben 23 mit der Getriebebodenplatte verbunden, der untere Zylinder 22 mit dem Fundament über Schrauben 24. Aufgrund der Drehsymmetrie kann das Lagerelement Kräfte in alle seitlichen Richtungen aufnehmen. Der Luftspalt 25 ist einstellbar, so dass die beteiligten Stirnseiten als Anschlag dienen können. Euer eine entsprechende Anwendung sollte der Werkstoff der Zylinder 20 und 22 vergütbar sein.

Als Gummiwerkstoff wird bei allen Elementen vorzugsweise Naturkautschuk verwendet. Durch geeignete Mischverhältnisse kann die notwendige Shorehärte genau eingestellt werden.

Fig. 7 zeigt ein vollständig elastisch gelagertes Getriebe mit darin integriertem Propellerdrucklager. Darin ist eine Propellerwelle 31 starr mit dem Getriebegrossrad 32 verbunden. Das Drucklager 34 umfasst einen Drucklagerkamm 33 und ein Drucklagergehäuse 35, welches mit dem Getriebegehäuse 36 am Schiffsfundament 37 abgestützt ist.

Für die vollständige elastische Lagerung sind elastische Elemente 38.a, 38.b (vertikale Abstützung), 39.a, 39.b (axiale Richtung), vorgesehen.

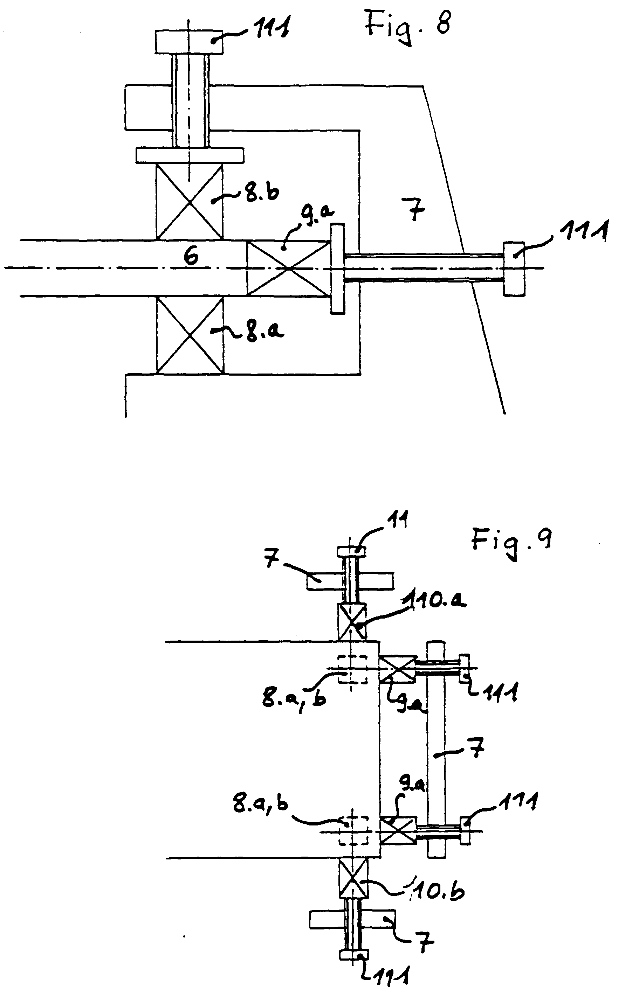

Wie Fig. 8 und 9 zeigen, können noch elastische Elemente 110a, 110b vorgesehen sein.

Stellvorrichtungen 111 dienen dem Einstellen der elastischen Elemente.

### Funktionsprinzip:

Die Propellerwelle 31 ist direkt mit dem Getriebegrossrad 32 gekuppelt, von wo der Propellerschub über einen Kamm 33 auf das Drucklager 34 übertragen wird. Dieses Drucklager 34 stützt sich im Drucklagergehäuse 35.a, welches wiederum direkt mit dem Getriebegehäuse 36 verbunden ist. Das Getriebegehäuse 36 ist gegenüber dem Schiffsfundament 37 elastisch abgestützt. In vertikaler Richtung wirkende elastische Elemente 38.a und 38.b tragen das Eigengewicht sowie die Kräfte aus den Reaktionsmomenten bei Leistungsübertragung. Diese Elemente können doppeltelastisch ausgeführt sein und frequenzmässig so abgestimmt werden, dass bei bestimmten Frequenzen eine optimale Dämpfung erreicht wird. Als elastisches Element wird in der Regel Naturkautschuk eingesetzt; daher die Beschränkung der Belastbarkeit auf eine Richtung.

Bei der erfindungsgemässen Ausführung wird nun der Propellerschub via den Kamm 33, das Drucklager 34, das Drucklagergehäuse 35 und das Getriebegehäuse 36, über zusätzliche elastische Elemente 39.a, 39.b in das Schiffsfundament 37 geleitet. Diese Elemente 39.a, 39.b sind in Richtung des Propellerschubes ausgerichtet und werden vorzugsweise in einer horizontalen Ebene in der Grossrad-/Drucklagerachse angeordnet. Die Steifigkeit der elastischen Elemente wird so abgestimmt, dass die Verformungen unter Eigengewicht und externen Kräften im Rahmen des Erlaubten bleiben und eine optimale Dämpfung erzielt werden kann.

Eine allgemeine Anwendung dieses Prinzips zeigen die Fig. 8 und 9:

Das Getriebe wird in allen Richtungen, d.h. auch seitlich mit elastischen Elementen abgestützt, 38.a, b; 39.a, b; 110.a, b. Die Anzahl und Steifigkeit dieser Elemente hängt von den Kräften und zulässigen Verformungen ab. Die Elemente können zusätzlich mit Stelleinrichtungen 111 versehen werden, welche eine Positionierung sowie eine mögliche Vorspannung der Elemente erlauben. Damit können z.B. Setzerscheinungen von Naturkautschuk im voraus kompensiert werden.

## Patentansprüche

1. Anlage mit einem elastisch gelagerten Zahnradgetriebe (1) mit mindestens einem Antriebsrad, welches Zahnradgetriebe (1) mit seiner Abtriebswelle (6) mit einer zu treibenden, auf einem Fundament (2) starr gelagerten Maschine verbunden ist und mit mindestens einer Antriebsmaschine kupelbar ist, wobei die Verbindung der Abtriebswelle (6) mit der zu treibenden Maschine als starre Verbindung ausgebildet ist und das Getriebe (1) am Fundament (2) derart über mehrere voneinander getrennte elastische, auf die normalen Betriebszustände ausgelegte Lager (F1 - F6) abgestützt ist und für die vorgesehenen normalen Betriebszustände des Getriebes (1) die Lage der Achse (6) der Abtriebswelle im wesentlichen unveränderlich ist, dadurch gekennzeichnet, dass an empirisch ermittelten Abstützpunkten mehrere voneinander getrennte elastische Lager (F1 - F6) zur Aufnahme von senkrecht wirkenden Kräften sowie mehrere voneinander getrennte elastische Lager (L1 - L4) zur Aufnahme von seitlich wirkenden Kräften vorgesehen sind, wobei alle elastischen Lager (F1 - F6) zur Aufnahme der senkrecht wirkenden Kräfte unter sich baugleich ausgebildet sind und alle elastischen Lager (L1 - L4) zur Aufnahme der seitlich wirkenden Kräfte unter sich ebenfalls baugleich ausgebildet sind und dabei die Eigenfrequenzen der elastischen (Lager (F1 - F6, L1 - L4) so gewählt sind, dass in den normalen Betriebszuständen keine Ueberdeckung mit den Eingriffsfrequenzen oder deren Harmonischen der Getrieberäder vorliegt.

2. Anlage nach Anspruch 1, dadurch gekennzeichnet, dass jedes elastische Lager (F1 - F6) zur Aufnahme von senkrecht wirkenden Kräften zur Bildung einer doppelt elastischen Lagerung aus mindestens zwei Elementen aufgebaut ist, von denen jedes aus einer oberen und einer unteren Gummilage (11 bzw. 13) und einem dazwischenliegenden Metallblock (12) besteht.

3. Anlage nach einem der Ansprüche 1 oder 2, dadurch gekennzeichnet, dass jedes elastische Lager (L1 - L4) zur Aufnahme von seitlich wirkenden Kräften aus einem äusseren und einem inneren Zylinder (20 bzw. 22) und einer zwischen diesen Zylindern angeordneten Gummischicht (21) besteht.

4. Anlage nach einem der Ansprüche 1-3, dadurch gekennzeichnet, dass zur Aufnahme bzw. Uebertragung von Lasten aus ausserordentlichen Betriebszuständen, wie z.B. Schockkräften, starre Anschläge (Al - A3) zwischen Getriebe (1) und Fundament (2) vorgesehen sind.

5. Anlage nach einem der Ansprüche 1-4 in einem Schiffsantrieb, bei welcher im Getriebe (1) ein Schublager (33-35) zur Aufnahme von Kräften der Welle der angetriebenen Maschine integriert ist und das Getriebe in einer zur Schublagerachse (36) parallel verlaufenden Horizontalebene über in dieser Ebene mindestens in Richtung der Schublagerachse wirkende elastische Elemente (38, 39) am Fundament abgestützt ist.

6. Anlage nach Anspruch 5, dadurch gekennzeichnet, dass in der genannten horizontalen Stützebene neben in Längsrichtung des Schublagers (33-35) wirkenden elastischen Abstützelementen (39) auch in Quer- und gegebenenfalls in vertikaler Richtung wirkende elastische Abstützelemente (38, 110) vorgesehen sind.

7. Anlage nach Anspruch 5 oder 6, dadurch gekennzeichnet, dass die elastischen Elemente in einer durch die Schublagerachse (36) liegenden Horizontalebene angeordnet sind.

8. Anlage nach einem der Ansprüche 5-7, dadurch gekennzeichnet, dass Mittel (111) vorgesehen sind, um die Lage und/oder die Vorspannung der elastischen Abstützelemente (38, 39, 110) einzustellen.

## Claims

1. Unit with a flexibly mounted gear mechanism (1), having at least one drive wheel, which gear mechanism (1) is connected by its output shaft (6) to a machine to be driven, which is mounted rigidly on a foundation (2), and can be coupled to at least one drive machine, the connection of the output shaft (6) to the machine to be driven being formed as a rigid connection, and the mechanism (1) being supported in this way on the foundation (2) by means of a plurality of flexible bearings (F1 - F6) which are separated from one another and are designed for the normal operating states, and the position of the axis (6) of the output shaft being essentially invariable for the envisaged normal operating states of the mechanism (1), characterized in that a plurality of flexible bearings (F1 - F6) which are separated from one another are provided at empirically determined supporting points to absorb vertically acting forces and a plurality of flexible bearings (L1 - L4) which are separated from one another are provided to absorb laterally acting forces, all the flexible bearings (F1 - F6) to absorb the vertically acting forces being of similar design to one another, and all the flexible bearings (L1 - L4) to absorb the laterally acting forces likewise being of similar design to one another and, in this case, the natural frequencies of the flexible bearings (F1 - F6, L1 - L4) being selected such that there is no overlap with the engagement frequencies of the gearwheels or their harmonics in the normal operating states.

2. Unit according to Claim 1, characterized in that each flexible bearing (F1 - F6) to absorb the vertically acting forces is made up of at least two elements to form a two-way flexible bearing, each of which elements consists of an upper and a lower layer of rubber (11 and 13 respectively) and a metal block (12) located between them.

3. Unit according to either of Claims 1 or 2, characterized in that each flexible bearing (L1 - L4) to absorb laterally acting forces consists of an outer and an inner cylinder (20 and 22 respectively) and a layer of rubber (21) arranged between the said cylinders.

4. Unit according to one of Claims 1-3, characterized in that rigid stops (A1 - A3) are provided between the mechanism (1) and the foundation (2) to absorb or transmit loads from exceptional operating states, such as for example shock forces.

5. Unit according to one of Claims 1-4 in a ship's drive, in which a thrust bearing (33-35) to absorb forces from the shaft of the driven machine is integrated in the mechanism (1), and the mechanism is supported on the foundation in a horizontal plane running parallel to the axis (36) of the thrust bearing by means of flexible elements (38, 39) which act in this plane at least in the direction of the axis of the thrust bearing.

6. Unit according to Claim 5, characterized in that, in addition to flexible supporting elements (39) which act in the longitudinal direction of the thrust bearing (33-35), flexible supporting elements (38, 110) which act in the transverse and, if appropriate, vertical direction, are also provided in the said horizontal supporting plane.

7. Unit according to Claim 5 or 6, characterized in that the flexible elements are arranged in a horizontal plane lying through the axis (36) of the thrust bearing.

8. Unit according to one of Claims 5-7, characterized in that means (111) are provided in order to set the position and/or the prestress of the flexible supporting elements (38, 39, 110).

## Revendications

1. Installation avec un engrenage (1) logé élastiquement avec au moins une roue menante, cet engrenage (1) étant relié par son arbre mené (6) à une machine à entraîner, logée de manière rigide sur un fondement (2) et pouvant être accouplé à au moins une machine d'entraînement, la liaison de l'arbre mené (6) avec la machine à entraîner étant réalisée sous forme de liaison rigide et l'engrenage (1) prenant appui sur le fondement (2) par plusieurs paliers élastiques (F1-F6) séparés les uns des autres, conçus pour les états de fonctionnement normaux et, pour les états de fonctionnement normaux prévus de l'engrenage (1), la position de l'axe (6) de l'arbre mené n'est sensiblement pas modifiée, caractérisée en ce que sont prévus à des points d'appui déterminés empiriquement plusieurs paliers élastiques (F1-F6) séparés les uns des autres pour recevoir des forces agissant verticalement ainsi que plusieurs paliers élastiques (L1-L4) séparés les uns des autres pour recevoir des forces agissant latéralement, tous les paliers élastiques (F1-F6) sont construits d'une manière identique pour recevoir les forces agissant verticalement et tous les paliers élastiques (L1-L4) sont réalisés de manière identique pour recevoir les forces agissant latéralement, et les fréquences propres des paliers élastiques (F1-F6, L1-L4) sont choisies de façon que dans des états de fonctionnement normaux, il n'y ait pas de recouvrement avec les fréquences d'engrènement ou leurs harmoniques des engrenages.

2. Installation selon la revendication 1, caractérisée en ce que chaque palier élastique (F1-F6) est réalisé pour recevoir des forces agissant verticalement pour former un logement élastique double à partir d'au moins deux éléments, dont chacun est constitué d'une couche de caoutchouc supérieure et inférieure (11 respectivement 13) et d'un bloc métallique (12) situé entre celles-ci.

3. Installation selon l'une des revendications 1 ou 2, caractérisée en ce que chaque palier élastique (L1-L4) pour la réception de forces agissant latéralement est constituée d'un cylindre extérieur et intérieur (20 respectivement 22) et d'une couche de caoutchouc (21) disposée entre ces cylindres.

4. Installation selon l'une des revendications 1-3, caractérisée en ce que, pour recevoir et transmettre des charges résultant d'états de fonctionnement extraordinaires, comme par exemple des forces de choc, des butées rigides (A1-A3) sont prévues entre l'engrenage (1) et le fondement (2).

5. Installation selon l'une des revendications 1-4 dans un entraînement de navire, où dans l'engrenage (1) un palier de poussée (33-35) est intégré pour recevoir des forces de l'arbre de la machine entraînée et où l'engrenage prend appui sur le fondement dans un plan horizontal s'étendant parallèlement à l'axe du palier de poussée (36) par des éléments élastiques (38, 39) agissant dans ce plan au moins en direction de l'axe du palier de poussée.

6. Installation selon la revendication 5, caractérisée en ce que sont prévus dans le plan d'appui horizontal précité, à part les éléments d'appui élastiques (39) agissant dans la direction longitudinale du palier de poussée (33, 35) également des éléments d'appui (38, 110) élastiques agissant dans la direction transversale et le cas échéant dans la direction verticale.

7. Installation selon la revendication 5 ou 6, caractérisée en ce que les éléments élastiques sont disposés dans un plan horizontal qui se situe dans l'axe (36) du palier de poussée.

8. Installation selon l'une des revendications 5-7, caractérisée en ce que des moyens (111) sont prévus pour régler la position et/ou la précontrainte des éléments d'appui élastiques (38, 39, 110).
